# EUROPEAN PATENT APPLICATION

(11) **EP 2 206 542 A1**
(43) Date of publication of application: **14.07.2010**
(21) Application number: 09150332.6
(22) Date of filing: 09.01.2009
(51) Int. Cl.: B01D 19/00, E21B 43/34

(54) **Method and apparatus for degassing a fluid mixture**

(71) Applicant: Shell Internationale Research Maatschappij B.V., 2596 HR Den Haag (NL)
(72) Inventor: Van Santen, Helmar, 1031 CM Amsterdam (NL); Schellekens, Cornelius Johannes, 1031 CM Amsterdam (NL); Verbeek, Paulus Henricus Joannes, 2288 GS Rijswijk (NL)
(74) Representative: Matthezing, Robert Maarten

(57) **Abstract**

The invention provides a method for degassing a fluid mixture comprising a carrier liquid and one or more gaseous and/or vaporizable components, the processes comprising:
1) introducing the fluid mixture at a first pressure into a device wherein the fluid mixture is accelerated, the pressure of the fluid mixture is decreased to a second pressure, and vaporizable components evaporate into a gaseous phase;
2) passing the fluid mixture and the gaseous phase as obtained in step 1) into a separator in which a gaseous fraction and a liquid fraction lean in gaseous and/or vaporizable components are obtained, operating the separator at a third pressure which is higher than the second pressure of the fluid mixture in step 1), and recovering the gaseous fraction from the separator;
3) decreasing the pressure of the liquid fraction lean in gaseous and/or vaporizable components as obtained in step 2) to a fourth pressure to obtain a gaseous fraction and a further degassed liquid fraction;
4) recovering the gaseous fraction as obtained in step 3);
5) recovering the further degassed liquid fraction as obtained in step 3); and
6) introducing at least part of the gaseous fraction as recovered in step 4) into the device in step 1) at a point which is located downstream of the point at which the fluid mixture is introduced into the device.

The invention further provides an apparatus suitable for carrying out the method according to the invention.

## Description

The present relates to a method and apparatus for degassing a fluid mixture.

Crude oils that are produced from an oil well are fluid mixtures that contain components such as oil, gas, water and solids. One of the reasons why gas and water that are present in the oil need to be removed from the oil is that they bring about chemical degradation of the oil. Hence, crude oils needs to be stabilized by removing gas and water. The gaseous components are usually remove from the oil by means of a degassing process which involves the use of a valve for establishing a pressure drop and a gravity settler. Such conventional degassing technique has, however, the disadvantage that large vessels need to be used. Such large vessels take a lot of space which is obviously undesired in offshore mode of operations, whereas at the seabed the walls of such require from safety and environmental perspective a minimum thickness which makes their application very expensive. Another disadvantage of such conventional degassing process is that the gas pressure applied in such a process is relatively low which affects the capability of transporting the degassed oil over a long distance.

Object of the present invention is to provide a method which enables the use of much more compact equipment that is save in use but needs to fulfill less stringent safety regulations, whereas as the same time a relatively high gas pressure is applied which improves the transport capacity of the degassed oil.

Surprisingly, it has now been found that this can be established when use is made of multistep method which includes a particular compression step and gas separation step.

Accordingly, the present invention relates to a method for degassing a fluid mixture comprising a carrier liquid and one or more gaseous and/or vaporizable components, the processes comprising:
1) introducing the fluid mixture at a first pressure into a device wherein the fluid mixture is accelerated, the pressure of the fluid mixture is decreased to a second pressure, and vaporizable components evaporate into a gaseous phase;
2) passing the fluid mixture and the gaseous phase as obtained in step 1) into a separator in which a gaseous fraction and a liquid fraction lean in gaseous and/or vaporizable components are obtained, operating the separator at a third pressure which is higher than the second pressure of the fluid mixture in step 1), and recovering the gaseous fraction from the separator;
3) decreasing the pressure of the liquid fraction lean in gaseous and/or vaporizable components as obtained in step 2) to a fourth pressure to obtain a gaseous fraction and a further degassed liquid fraction;
4) recovering the gaseous fraction as obtained in step 3);
5) recovering the further degassed liquid fraction as obtained in step 3); and
6) introducing at least part of the gaseous fraction as recovered in step 4) into the device in step 1) at a point which is located downstream of the point at which the fluid mixture is introduced into the device.

The method according to the present invention has the major advantage that now instead of large vessels of which the walls need to meet stringent safety and environmental requirements a compact in-line unit can be used which is based on pipelines. Moreover, the transport capacity of the degassed fluid mixture is considerably improved.

In the method according to the present invention the fluid mixture is introduced into a device in step 1) at a first pressure (p1) and the pressure of the fluid mixture is decreased to a second pressure (p2). Preferably, the ratio of the second pressure (p2) and the first pressure (p1) is in the range of 0.001-0.9 (p2/p1). More preferably, the ratio of the second pressure (p2) and the first pressure (p1) is in the range of 0.1-0.8 (p2/p1).

In step 3) the pressure of the liquid fraction lean in gaseous and/or vaporizable components as obtained in step 2) is decreased to a fourth pressure (p4) to obtain a gaseous fraction and a further degassed liquid fraction. Preferably, the ratio of the fourth pressure (p4) and the first pressure (p1) is in the range of from 0.001-0.8 (p4/p1). More preferably, the ratio of the fourth pressure (p4) and the first pressure (p1) is in the range of from 0.1-0.7 (p4/p1).

In step 2) the fluid mixture and the gaseous phase as obtained in step 1) are passed into a separator in which a gaseous fraction and a liquid fraction lean in gaseous and/or vaporizable components are obtained, whereby the separator is operated at a third pressure (p3) which is higher than the second pressure (p2) of the fluid mixture in step 1), and gaseous fraction is recovered from the separator. Preferably, the ratio of the third pressure (p3) and the second pressure (p2) is in the range of from 1-10 (p3/p2). More preferably, the ratio of the third pressure (p3) and the second pressure (p2) is in the range of from 1-3 (p3/p2).

Suitably, the first pressure in step 1) is in the range of from 1-400 bara. Preferably, the first pressure is in the range of from 3-100 bara, more preferably in the range of from 7-80 bara.

Suitably, the fluid mixture which is introduced into the device in step 1) has a temperature in the range of from -50 to +100 °C. Preferably, the fluid mixture which is introduced into the device in step 1) has a temperature in the range of from -20 to +60 °C.

In the method according to the present invention the fourth pressure is suitably in the range of from 0.4-200 bara. Preferably, the fourth pressure is in the range of from 1-60 bara.

Suitably, the second pressure of the fluid mixture in step 1) is in the range of from .0.9-80 bara. Preferably, the second pressure of the fluid mixture in step 1) is in the range of from 1-60 bara.

The third pressure at which the separator is operated in step 2) is suitably in the range of from 0.9-80 bara. Preferably, the third pressure at which the separator is operated in step 2) is in the range of from 1-60 bara.

Preferably, the device used in step 1) is a liquid jet gas compressor. A variety of liquid jet gas compressors can be used in the present invention.

In accordance with the present invention in step 2) use is made of a separator. A wide variety of separators can be used in step 2). Preferably, use is made of a cyclonic separator in step 2) in which the liquid phase is separated from the gaseous phase by migrating the liquid phase towards the inner wall of the separator and migrating the gaseous phase towards the central axis of the separator. A suitable separator for use in step 2) has, for instance, been described in WO 02/056999 A1.

In accordance with the present invention the gaseous fraction and the further degassed liquid fraction as obtained in step 3) are introduced into a degassing device and the gaseous fraction and further degassed liquid fraction are subsequently recovered from the degassing device in respective steps 4) and 5).

Preferably, such a degasser device comprises a cyclonic liquid degassing separator.

In an attractive embodiment the cyclonic liquid degassing separator to be used in accordance with the present invention comprises:
- a vortex tube having a throat section in which the fluid mixture is accelerated such that the static pressure of the fluid mixture is decreased and vaporizable components evaporate into a gaseous phase;
- one or more swirl imparting vanes for inducing the fluid mixture to swirl within the vortex tube thereby inducing the mixture to be separated by centrifugal forces into a degassed liquid fraction and a gas enriched fraction;
- a degassed liquid outlet conduit which is located at or near the outer circumference of the vortex tube for discharging the degassed liquid fraction; and
- a gas outlet conduit which is located at or near a central axis of the vortex tube for discharging the gas enriched fraction -**characterized in that** the separator further comprises fluid homogenization means for inducing the fluid mixture to flow as a substantially homogeneously dispersed gas- liquid mixture through the throat section.

Such a cyclonic liquid degassing separator has been described in more detail in WO 2008/000753, which document is hereby incorporated by reference.

In another attractive embodiment of the present invention the cyclonic liquid degassing separator to be used comprises:
- a vortex tube having a throat section in which the fluid mixture is accelerated such that the static pressure of the fluid mixture is decreased and vaporizable components evaporate into a gaseous phase;
- one or more swirl imparting vanes for inducing the fluid mixture to swirl within the vortex tube thereby inducing the mixture to be separated by centrifugal forces into a degassed liquid fraction and a gas enriched fraction;
- a degassed liquid outlet conduit which is located at or near the outer circumference of the vortex tube for discharging the degassed liquid fraction; and
- a gas outlet conduit which is located at or near a central axis of the vortex tube for discharging the gas enriched fraction.

Such a cyclonic liquid degassing separator has been described in more detail in WO 2006/070019, which document is hereby incorporated by reference.

Alternatively, the degasser device comprises a vessel in which by means of gravity the gaseous fraction and the further degassed liquid fraction are separated from each other, after which said fractions are subsequently recovered in respective steps 4) and 5).

Suitably, in the method according to the present invention the pressure is decreased in step 3) by means of an orifice or a valve. Preferably, use is made of a valve to decrease the pressure in step 3).

Suitably, the fluid mixture obtained in step 1) is subjected to a swirling motion before it is subjected to step 2).

The fluid mixture can suitably a crude oil or a solvent from which gaseous components such as, for example, carbon dioxide need to be removed.

Suitably, the fluid mixture comprises a crude oil as carrier liquid and the gaseous and/or vaporizable components comprise natural gas and/or methane, ethane, propane, butane and pentane, carbon dioxide and/or hydrogen sulfide.

In another embodiment the fluid mixture comprises water as carrier liquid and the gaseous and/or vaporizable components comprise one or more toxic components such as benzene, toluene, ethylbenzene and/or xylene.

In yet another embodiment the fluid mixture comprises one or more dimethylethers of polyethylene glycol or methanol as carrier liquid and the gaseous and/or vaporizable components comprise carbon dioxide, and/or hydrogen sulfide, and/or mercaptans, and/or carbonyl sulfide.

Preferably, the present method is carried out in such a way that in step 1) at least 50% of the vaporizable components evaporate into the gaseous phase.

Suitably, a substantially inert gas may be injected into the fluid mixture to enhance homogenization of the fluid mixture before it is being subjected to the method according to the present invention. Examples of such inert gases include helium, argon, carbon dioxide and/or vaporized steam.

The present invention also provides an apparatus for degassing a fluid mixture comprising a carrier liquid and one or more gaseous and/or vaporizable components, which apparatus comprises a compressor device for accelerating the fluid mixture, decreasing the pressure of the fluid mixture, and evaporating vaporizable components into a gaseous phase, which device comprises an inlet for introducing the fluid mixture into the device and an outlet for removing the fluid mixture and the gaseous phase from the compressor device; a separator for obtaining a gaseous fraction and a liquid fraction lean in gaseous and/or vaporizable components, which separator comprises an inlet for introducing the fluid mixture and the gaseous phase from the device into the separator, which inlet communicates with the outlet of the compressor device, an outlet for recovering the gaseous fraction from the separator, and an outlet for removing the liquid fraction lean in one or more gaseous and/or vaporizable components from the separator; an orifice or valve for decreasing the pressure of the liquid fraction lean in gaseous and/or vaporizable components to obtain a gaseous fraction and a further degassed liquid fraction, which orifice or valve communicates with the outlet for removing the liquid fraction lean in one or more gaseous and/or vaporizable components from the separator; and a degassing device which communicates with hethe expansion device, which degassing device comprises an outlet for recovering the gaseous fraction, and an outlet for recovering the further degassed liquid fraction, which outlet for recovering the gaseous fraction communicates with the compressor device at a point which is located downstream of the point at which the fluid mixture is introduced into the compressor device

Preferably, the device used in step 1) is a liquid jet gas compressor

Suitably, use can be made of a liquid jet gas compressor as described hereinabove.

Suitably, the separator to be used in step 2) can be any of the separators described hereinabove, in particular those described in WO 2008/000753 and WO 2006/070019

Alternatively, the degasser device comprises a vessel in which by means of gravity the gaseous fraction and the further degassed liquid fraction are separated from each other, after which said fractions are subsequently recovered in respective steps 4) and 5).

Suitably, between the compressor device to be used in step 1) and the separator to be used in step 2) a swirling element is arranged for subjecting the fluid mixture obtained in step 1) to impose a swirling motion on the fluid mixture before it is introduced into the separator.

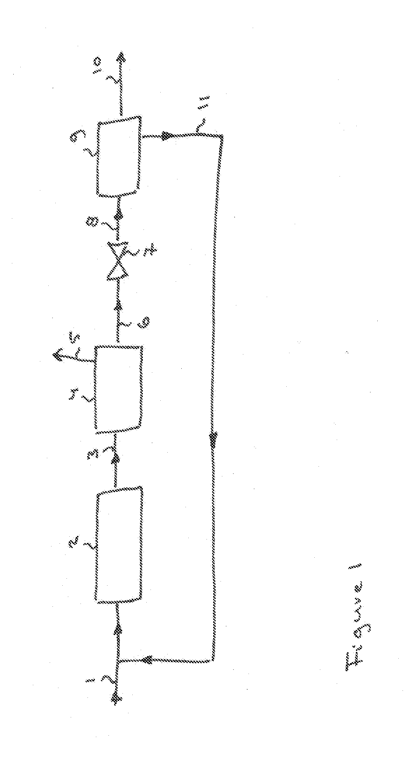

In Figure 1 an apparatus to be used in accordance with the present invention is schematically shown. A fluid mixture is introduced via a conduit (1) into a liquid jet gas compressor (2) at a first pressure. In said compressor the fluid mixture is accelerated , the pressure of the fluid mixture is decreased to a second pressure, and vaporizable components are evaporated into a gaseous phase. The fluid mixture and the gaseous phase thus obtained are passed via a conduit (3) into a cyclonic separator (4) in which a gaseous fraction and a liquid fraction lean in gaseous and/or vaporizable components are obtained. Said separator is operated at a third pressure which is higher than the second pressure of the fluid mixture in the liquid jet gas compressor. Via a conduit (5) the gaseous fraction so obtained is recovered. The liquid fraction lean in gaseous and/or vaporizable components is then passed via a conduit (6) to a valve (7) by means of which the pressure of the liquid fraction lean in gaseous and/or vaporizable components as obtained in step 2) is decreased to a fourth pressure to obtain a gaseous fraction and a further degassed liquid fraction. The gaseous fraction and further degassed liquid fraction so obtained are then passed via a conduit (8) into a degassing unit (9). The further degassed liquid fraction is withdrawn from the degassing unit () via a conduit (10), and the gaseous fraction is withdrawn from the degassing device (9) and recycled to the liquid jet gas compressor via a conduit (11).

## Claims

1. A method for degassing a fluid mixture comprising a carrier liquid and one or more gaseous and/or vaporizable components, the processes comprising:
1) introducing the fluid mixture at a first pressure into a device wherein the fluid mixture is accelerated, the pressure of the fluid mixture is decreased to a second pressure, and vaporizable components evaporate into a gaseous phase;
2) passing the fluid mixture and the gaseous phase as obtained in step 1) into a separator in which a gaseous fraction and a liquid fraction lean in gaseous and/or vaporizable components are obtained, operating the separator at a third pressure which is higher than the second pressure of the fluid mixture in step 1), and recovering the gaseous fraction from the separator;
3) decreasing the pressure of the liquid fraction lean in gaseous and/or vaporizable components as obtained in step 2) to a fourth pressure to obtain a gaseous fraction and a further degassed liquid fraction;
4) recovering the gaseous fraction as obtained in step 3);
5) recovering the further degassed liquid fraction as obtained in step 3); and
6) introducing at least part of the gaseous fraction as recovered in step 4) into the device in step 1) at a point which is located downstream of the point at which the fluid mixture is introduced into the device.

2. The method according to claim 1, wherein the ratio of the second pressure (p2) and the first pressure (p1) is in the range of 0.001-0.9 (p2/p1).

3. The method according to claim 1 or 2, wherein the ratio of the fourth pressure (p4) and the first pressure (p1) is in the range of from 0.001-0.8 (p4/p1).

4. The method according to any one of claims 1-3, wherein the ratio of the third pressure (p3) and the second pressure (p2) is in the range of from 1-10 (p3/p2).

5. The method according to any one of claims 1-4, wherein the first - pressure is in the range of from 1-400 bara.

6. The method according to any one of claims 1-5, wherein the fluid mixture which is introduced into the device in step 1) has a temperature in the range of from -50 to +100 °C.

7. The method according to any one of claims 1-6, wherein the third pressure is in the range of from 0.9-80 bara and/or wherein the fourth pressure is in the range of from 0.4 -200 bara.

8. The method according to any one of claims 1-7, wherein the device in step 1) is a liquid jet gas compressor and/or wherein the separator in step 2) is a cyclonic separator.

9. The method according to any one of claims 1-8, wherein the pressure is decreased in step 3) by means of an orifice or a valve.

10. The method according to any one of claims 1-9, wherein the gaseous fraction and the further degassed liquid fraction as obtained in step 3) are introduced into a degassing device and the gaseous fraction and further degassed liquid fraction are subsequently recovered from the degassing device in respective steps 4) and 5).

11. The method according to any one of claims 1-10, wherein the fluid mixture comprises crude oil as carrier liquid and the gaseous and/or vaporizable components comprise natural gas and/or methane, ethane, propane, butane and pentane, carbon dioxide and/or hydrogen sulfide or wherein the fluid mixture comprises water as carrier liquid and the gaseous and/or vaporizable components comprise one or more toxic components such as benzene, toluene, ethylbenzene and/or xylene wherein the fluid mixture comprises one or more dimethylethers of polyethylene glycol or methanol as carrier liquid and the gaseous and/or vaporizable components comprise carbon dioxide, and/or hydrogen sulfide, and/or mercaptans, and/or carbonyl sulfide.

12. The method according to any one of claims 1-11, wherein in step 1) at least 50% of the vaporizable components evaporate into the gaseous phase.

13. An apparatus for degassing a fluid mixture comprising a carrier liquid and one or more gaseous and/or vaporizable components, which apparatus comprises a compressor device for accelerating the fluid mixture, decreasing the pressure of the fluid mixture, and evaporating vaporizable components into a gaseous phase, which device comprises an inlet for introducing the fluid mixture into the device and an outlet for removing the fluid mixture and the gaseous phase from the compressor device; a separator for obtaining a gaseous fraction and a liquid fraction lean in gaseous and/or vaporizable components, which separator comprises an inlet for introducing the fluid mixture and the gaseous phase from the device into the separator, which inlet communicates with the outlet of the compressor device, an outlet for recovering the gaseous fraction from the separator, and an outlet for removing the liquid fraction lean in one or more gaseous and/or vaporizable components from the separator; an orifice or valve for decreasing the pressure of the liquid fraction lean in gaseous and/or vaporizable components to obtain a gaseous fraction and a further degassed liquid fraction, which orifice or valve communicates with the outlet for removing the liquid fraction lean in one or more gaseous and/or vaporizable components from the separator; and a degassing device which communicates with the expansion device, which degassing device comprises an outlet for recovering the gaseous fraction, and an outlet for recovering the further degassed liquid fraction, which outlet for recovering the gaseous fraction communicates with the compressor device at a point which is located downstream of the point at which the fluid mixture is introduced into the compressor device.

14. The apparatus according to claim 13, wherein the compressor device is a liquid jet gas compressor.

15. The apparatus according to claim 13 or 14, wherein the separator is a cyclonic separator and /or wherein the degassing device is a cyclonic liquid degassing separator.
